# EUROPEAN PATENT APPLICATION

(11) **EP 4 379 871 A1**
(43) Date of publication of application: **05.06.2024**
(21) Application number: 22383154.6
(22) Date of filing: 29.11.2022
(51) Int. Cl.: H01M 8/0206, H01M 8/0215, H01M 8/0228, H01M 8/0232, H01M 8/122, H01M 8/2432, H01M 8/12

(54) **A SOLID OXIDE CELL STACK MADE OF SINGLE REPEATING UNITS, EACH COMPRISING A CERAMIC CELL WITH A CORRUGATED MEMBRANE AND A FLAT METALLIC INTERCONNECT**

(71) Applicant: H2B2 Electrolysis Technologies, S.L., 28010 Madrid (ES)
(72) Inventor: TARANCÓN RUBIO, Albert, Barcelona (ES); TORRELL FARO, Marc, Barcelona (ES); STEFANOV, Radostin, Castelldefels (ES); SABATO, Antonio Gianfranco, Barcelona (ES); BREY SÁNCHEZ, José Javier, Sevilla (ES)
(74) Representative: Ponti & Partners, S.L.P

(57) **Abstract**

The present invention relates to a solid oxide cell (SOC) stack made of single repeating units (SRU), each of which comprising:
- a ceramic cell with a corrugated membrane and a sealing frame with gas distribution holes and channels, and
- a flat metallic interconnect.

## Description

### Field of the invention

The present invention relates to electrochemical devices, in particular to a solid oxide cell (SOC) stack made of single repeating units (SRU), each of which comprising a ceramic cell with a corrugated membrane and a sealing frame with gas distribution holes and channels, and a flat metallic interconnect;

### Background

Hydrogen and electricity generators based on solid oxide cells (SOC) are recognized as one of the options with most potential for the development of a clean-energy-based sustainable economy. Enormous efforts have been dedicated towards their optimization, traditionally involving a great deal of materials research but more recently the focus includes structural and manufacturing optimization.

Among the many SOC architectures that have been proposed in the last decade, the tubular and especially the flat one have reached the most popularity. (Bora Timurkutluk, CigdemTimurkutluk, Mahmut D.Mat, Yuksel Kaplan, A review on cell/stack designs for high performance solid oxide fuel cells, Renewable and Sustainable Energy Reviews, 56 (2016) 1101-1121.) The manufacture of flat cells is especially simple and cost-effective and they are easily interconnected to form devices with high power and power density. (Solid Oxide Fuels Cells: Facts and Figures. Past, Present and Future Perspectives for SOFC Technologies, edited by John T. S. Irvine and Paul Connor, Springer-Verlag London 2013; Stephen J. McPhail, Jari Kiviaho, Bruno Conti, The Yellow Pages of SOFC Technology, published by ENEA & VTT, ISBN: 978-951-38-8602-8 (printed); 978-951-38-8603-5 (online) (2017)).

The basic structure of a SOC device is based on a selected number of so-called single repeating units (SRU) connected normally in series and placed between two metal plates, called endplates. Each SRU typically comprises an interconnect and a solid oxide cell, consisting of a fuel electrode, electrolyte and an oxygen electrode. SRUs also have channels for distributing/collecting the reaction gasses to/from both electrodes. Typically, there are also gas manifolds for conducting the reaction gases to the distribution channels and collecting the exhaust from them. These manifolds are usually formed upon stacking the cells, by means of holes made in them for this purpose. In some designs, one of the gasses, usually air, is fed directly into the interconnect channels from the environment surrounding the stack, without using such manifolds.

Currently, the preferred technology for manufacturing flat cells is tape casting. It involves applying an appropriately formulated low-viscosity slip through a thin opening of a doctor blade onto a flexible substrate so that a thin layer is obtained. After drying, the obtained layer is essentially an organic-inorganic composite, in which the inorganic particles are bound together with a mix of a thermoplastic polymer and a plasticizer. This composite tape is soft and plastic and is easily cut, punched and stacked.

Practically every structural layer of a flat-cell SRU can be made by tape casting, and the green tapes of the different materials can be joined together by isostatic hot pressing. When submitted to an appropriate thermal treatment, the organic components are decomposed and the remaining inorganic particles are sintered, producing high-density multilayer ceramic structures. However, while co-firing the layers is desirable from cost-reduction point of view, it is often difficult to find materials with compatible sintering and thermal expansion characteristics.

Usually, either the electrolyte or one of the electrodes is made relatively thick (in the order of hundreds of microns), to support mechanically the cell, while the other layers are made much thinner to reduce ohmic losses. These thinner layers can also be made by screen-printing or plasma spraying, especially if a very small thickness is required.

The interconnect typically contains two sets of channels (one for each electrode) in a crossflow or co-flow configuration. The channels must be large enough to ensure a small pressure drop in the SRU and efficient operation of the system.

The prior art discloses several processing, performance or cost improvements of such stacks by introducing a step of corrugating or patterning some of the elements of the SRU without significantly modifying the described tape-casting-based technology. Simultaneously, substantial efforts have also been made to obtain monolithic structures in a single firing step.

The beginnings of the development of such technologies can be traced back to the 1980s. A report from Argonne National Lab (ANL) from 1991 (Kevin M. Myles, Samit K. Bhattacharyya, Application of The Monolithic Solid-oxide Fuel Cell to Space Power Systems, Argonne National Laboratory, for the Eight Symposium on Space Nuclear Power Systems, Albuquerque, New Mexico, 6-10 January 1991) described an experimental technology for making monolithic SOFC stacks with corrugated electrodes that had been allegedly under development since the 1983. Green electrolyte, electrode and interconnect tapes were made by tape casting or hot-roll-calandering of polymer-binder mixtures. Then the electrode sheets were corrugated by folding onto warm molds and then stacked with the electrolyte and interconnect sheets in crossflow configuration. Afterwards the stacks were heated slightly above the glass-transition temperature of the binder to promote bonding between the layers and finally were sintered to form monolithic structures. The main reported advantage of the as-obtained stack was high power density, however, the implementation of the technology was hurdled by multiple cracks and electrode processing yield of only about 60 % in spite of attempts to promote crack-pinning by introducing additional phases.

US4476196 (1984) discloses a monolithic all-ceramic structure with square channels in the fuel or oxygen electrode disposed in crossflow configuration. The layers were made by extrusion and tape casting and then stacked and cosintered. However, US4857420 (1989) pointed out that such cosintering could not avoid the formation of multiple microcracks and proposed to separate the components of each SRU into two layers, to be sintered separately before stacking.

US5273837 (1993, Corning) claimed a stack structure with at least the electrolyte in the form of a very thin (45 µm), flexible and strong corrugated sheet, allowing fracture-toughness and thermal-shock-resistance enhancement through a compliant mechanism. Similarly, mechanical and thermal-shock-resistance enhancement was pursued by the process disclosed in JP5010773B2 (1999, Corning), but in this case a variety of different textures were proposed.

Several possible techniques were suggested for imprinting the patterns on tape-cast sheets, such as vacuum forming, press forming, roll-press forming, and graining. In particular, graining (or peening) of green sheets was also proposed by Murata (JPH09199143A, 1996).

US7410716B2 (2003, Corning) and US7947213B2 (2003, Corning) introduced a method of making textured electrolyte sheets with 5-50 µm deep grooves by embossing. The goal stated in this case was electrolyte resistance reduction.

Mitsubishi Heavy Industries patented a dimple-reinforced three-layer structure of oxygen electrode-electrolyte-fuel electrode layers (EP0670606B1, 1994). After co-sintering, these undulated layers would be stacked with flat ceramic or metallic interconnects. Mitsubishi reports (Akihiro Nakanishi, Masatoshi Hatton and Yoshinori Sakaki, Hitoshi Miyamoto, Hidetoshi Aiki, Koichi Takenobu and Masanori Nishiura, Development of MOLB Type SOFC, Proceedings of The Electrochemical Society, PV 2003-7, 53-59 (2003); Yukio Yoshida, Nagao Hisatome, Koichi Takenobu, Development of SOFC for Products, Mitsubishi Heavy Industries, Ltd. Technical Review Vol.40 No.4 (Aug. 2003)) provide measurements on experimental systems of up to 15 kW made by this technology. Although power density enhancement was announced as the technology's main advantage, the reported maximum power density of 0.24 W/cm² is comparable to that of conventional flat cells. Up to the knowledge of the present inventors, there are no posterior reports about this technology.

The fact that currently most commercial SOC stacks still employ flat cells, while the gas distribution channels are made in the (typically metal) interconnects, confirms that such obstacles have not been overcome and the described patterning technologies never matured enough to be used in industrial-scale manufacture.

In order to overcome the above-mentioned drawbacks, the present inventors have developed a new and advantageous SRU design whose manufacture is preferably made by modern 3D-printing technologies. 3D printing advantageously allows for easy mass manufacturing. Contrary to the standard configuration, this design comprises a corrugated ceramic cell and a flat interconnect. This design provides a significant improvement of the volumetric power density (VPD) both through SRU thickness reduction and current density increase due to the corrugation-enhanced active area of the cell. Additionally, the disclosed design presents an enhanced mechanical strength, which is beneficial for the durability of the stack. This design advantageously also simplifies the manufacture of interconnection plates, which no longer require distribution channels.

### Summary of the invention

In a first aspect, the present invention relates to a solid oxide cell (SOC) stack made of single repeating units (SRU), each of which comprising:
- a ceramic cell with a corrugated membrane and a sealing frame with gas distribution holes and channels, and
- a flat metallic interconnect.

### Brief description of the drawings

Figure 1 represents the typical geometry of an SRU known in the art.
Figure 2 shows an SRU according to the present invention, in comparison to figure 1, with a cylindrically corrugated cell and a flat interconnect, in which the channel cross section and membrane thickness are preserved.
Figure 3 shows the geometry of an SOFC/SOEC cell according to one embodiment of the present invention, wherein the basic layout of the cell consists of a corrugated membrane and a frame forming a single body.
Figure 4 illustrates a cell with electrodes and seal and the corresponding interconnect with protective layer and seal.
Figure 5 shows the parameters of the corrugated cell membrane.
Figure 6 shows a top view scheme of the ceramic solid oxide cell where the membrane channels, sealing frame, gas channels and inlets/outlets can be appreciated.

### Detailed description

### Product

The present invention relates to a solid oxide cell (SOC) stack made of single repeating units (SRU), each of which (SRU) comprising:
- a ceramic cell with a corrugated membrane and a sealing frame with gas distribution holes and channels, and
- a flat metallic interconnect;
wherein said ceramic cell and flat metallic interconnect are stacked on top of each other; and
wherein the corrugated membrane is functionalized on both sides with electron-conductive ceramic layers which are a fuel electrode and an oxygen electrode.

In a preferred embodiment, said multiple single repeating units (SRU) are connected in series.

In another preferred embodiment, the cell and the interconnect have a rectangular, circular or square shape.

The ceramic cell comprises a membrane with two sets of channels arising from its corrugated shape (called "membrane channels" hereinafter) and a sealing frame with gas distribution holes and channels (called "frame channels" hereinafter) for each of these sets.

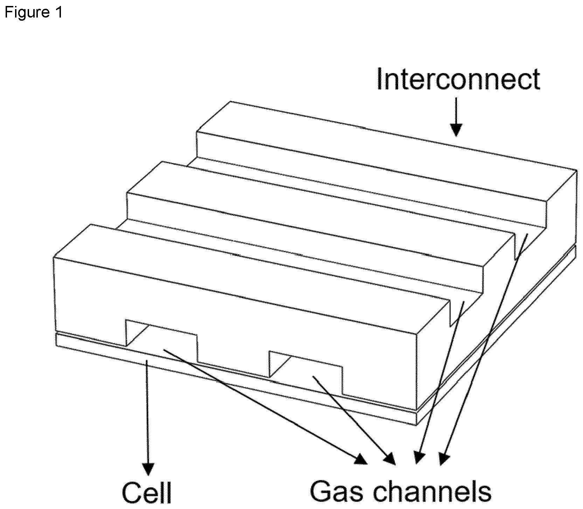

The interconnect is flat and serves as a lid for the membrane channels, in opposition to the conventional flat-cell design, in which there are channels in the interconnect and the flat cell is the lid (See Figure 1).

In principle, the stacks of the present invention can operate reversibly in SOFC and SOEC mode, i.e. the solid oxide cell (SOC) stack of any of the embodiments in the present invention can be a solid oxide fuel cell (SOFC) or a solid oxide electrolyzer cell (SOEC). Although an SOFC/SOEC system can run on a variety of gases, hydrogen is typically used as the fuel in the electricity generation mode while water steam is used in the electrolysis mode, although also mixtures of hydrogen and CO₂ can be used under co-electrolysis mode. In the former case, hydrogen is passed through one of the sets of membrane channels while the oxygen supplied to the other set of channels diffuses across the membrane in the form of oxygen ions and oxidizes the hydrogen, so that steam is collected at the outlet hole of the fuel side. In the latter case, steam (optionally mixed with hydrogen) is fed into the first and air or oxygen into the second set of channels, the hydrogen generated being collected at the outlet hole of the fuel side. Therefore, for simplicity, hereinafter the gasses corresponding to the two sides of the cell will be called "fuel" and "oxygen" while the corresponding cell surfaces will be referred to as "the fuel side" and "the oxygen side".

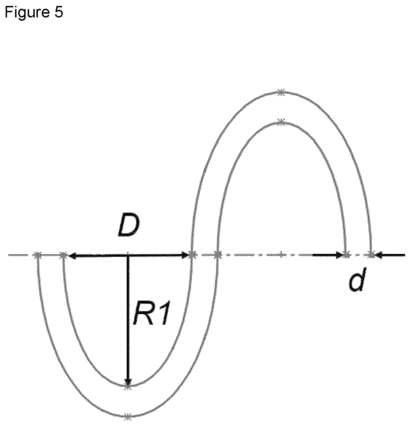

The benefits of the present invention are mostly derived from the use of a corrugated cell membrane. There are many possible corrugation profiles. In a preferred embodiment of this invention, the cell membrane corrugation has an ellipsoidal geometry, meaning that it is made of ellipsoidal half-tubes connected in such a way that the tube channels are alternatively facing up and down. This geometry can be described by only 3 parameters (see figure 5), such as membrane thickness (d), the internal diameter of the ellipsoid (*D*), and the elliptical aspect ratio (*K* = *2R₁*/*D*)*.*

According to a preferred embodiment of the invention, the membrane thickness is *d* = 0.10 to 0.40 mm, more preferably 0.20 to 0.30 mm, even more preferably 0.20 mm, being the aspect ratio *K=* 1, corresponding to a cylinder. In another preferred embodiment, the internal diameter of the corrugation is *D* = 0.70 to 1.20 mm, more preferably 0.80 to 1.00 mm, even more preferably 1.00 mm. These values provide low electrolyte resistance and a membrane channel cross-section comparable to that of conventional flat-cell stacks (around 1.0-1.5 mm²). The height of such a membrane is 1.2-1.6 mm, and the height of the cell frame and therefore the cell is preferably the same.

It can be shown that a greater area enhancement and therefore power density can be achieved by reducing the aspect ratio, the internal width of the corrugation or the membrane thickness. However, it should be kept in mind that there are factors constraining the reduction of these parameters. For example, the internal diameter of the membrane channels should not be reduced excessively as this would cause a significant pressure drop in the cell and a consequent loss of performance at the system level. On the other hand, channel size reduction leads to cell thickness reduction, which may give rise to mechanical-strength-related manufacturing issues as it is happening also for the thickness of the membrane.

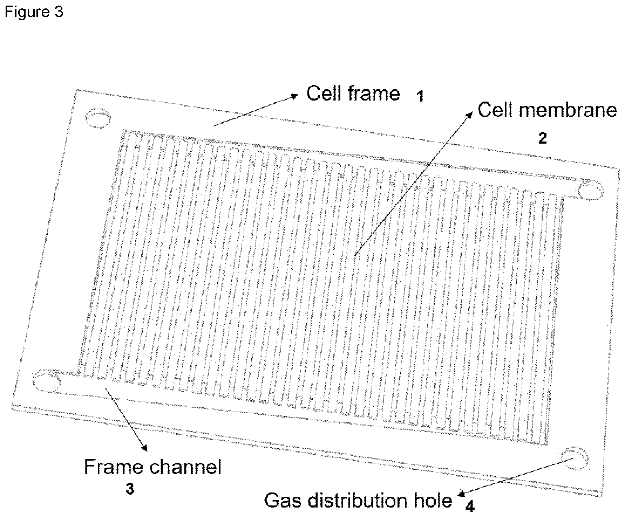

In another preferred embodiment, the invention comprises an input frame channel at one end of the membrane-channel set and an output frame channel at the opposite end (See Figure 3). Furthermore, there is preferably one input hole in the input frame channel and one output hole in the output frame channel. Furthermore, in another preferred embodiment the input and output holes are disposed close to the ends of a cell diagonal, while the holes corresponding to the other set of membrane channels are disposed close to the ends of the other cell diagonal (See Figure 3).

In this configuration, one of the gases, e.g. the fuel, is fed through the input hole into the input frame channel, from which it is distributed into all membrane channels on the fuel side of the cell. After the electrochemical reaction on the surface of the membrane channels, the exhaust is collected into the output frame channel and from there into the output hole. The geometrical configuration of the oxygen side channels is the same.

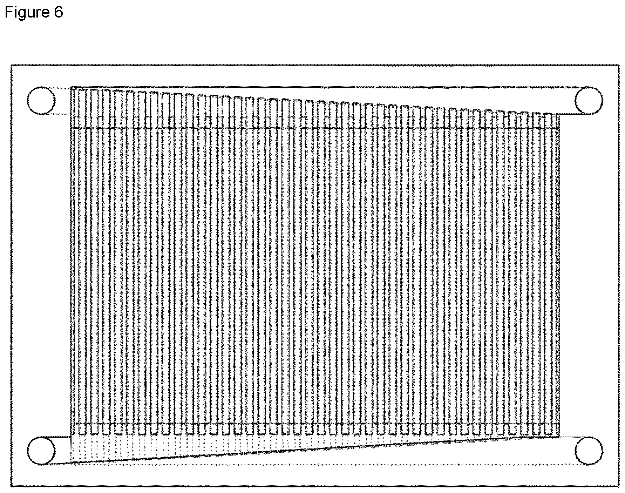

The shape of the frame channels can be optimized based on flow simulations to provide a uniform distribution of gas velocities across each set of membrane channels. In particular, it has been found that a particularly appropriate shape in this sense is a tapered one with a narrow straight segment corresponding to the 3 or 4 channels closest to the input and output holes (see Figure 3 and Figure 6).

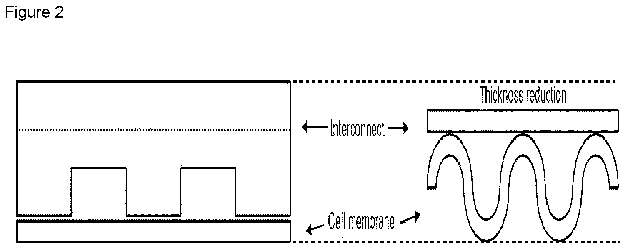

The power density of the prior-art SOFC/SOEC devices is limited largely by the existence of electrochemically inactive surfaces and volume in their structure. For example, the area surrounding the electrodes can reach more than 40 % of the total area of some conventional cell designs. Typical metal interconnects occupy even more volume, their thickness being more than an order of magnitude larger than that of the cell itself (See Figure 1 and 2).

The present invention reduces both the unused area surrounding the cell and the interconnect volume. The volumetric power density (VPD) of the SRU is also improved due to the increase of the active area of the cell, which effectively increases the current density. In Figure 2, the conventional SRU geometry is compared to an SRU according to the present invention, with a cylindrically corrugated cell and a flat interconnect, in which the channel cross section and membrane thickness are preserved.

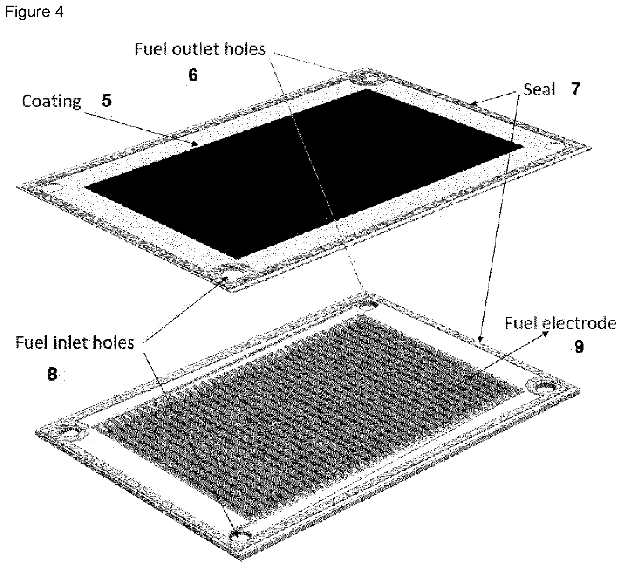

While it is preferred to minimize interconnect thickness in order to maximize power density, it is known that the oxidation of some metal alloys used for this purpose accelerates below certain thickness values, especially when both sides of the metal are exposed to the oxidation atmosphere (Zhenguo Yang, Matthew S. Walker, Prabhakar Singh, Jeffry W. Stevenson, and Truls Norby, Oxidation Behavior of Ferritic Stainless Steels under SOFC Interconnect Exposure Conditions Journal of The Electrochemical Society, 151 (12) B669-B678 (2004).). Therefore, according to a preferred embodiment of the present invention, the interconnect thickness is limited to 0.2-0.5 mm. Figure 4 shows such an interconnect having the same size as the cell and gas distribution holes matching those of the cell in size and position.

The total thickness of a cell + interconnect + seal (SRU) for the preferred embodiment with 0.2 mm interconnect can be less than 2 mm, compared to typical values of ca. 3 mm or more for conventional flat-cell designs.

### Materials and technologies

The advantages of the present invention arise mostly from its geometrical configuration, while known materials and technologies are used for its manufacture. Thus, in a preferred embodiment, the ceramic cell is made of ion conductive material, preferably doped zirconia or doped ceria, more preferably doped zirconia, and even more preferably yttria-stabilized zirconia (YSZ).

In a preferred embodiment, the fuel electrode is made of cermet. In a particular embodiment in which YSZ is used as electrolyte, the preferred material for the fuel electrode is a Ni-YSZ cermet typically obtained by reducing a NiO-YSZ ceramic composite, during the first start-up of the stack.

In another preferred embodiment, an electron conductive metal coating is present on the fuel electrode, preferably said metal is nickel. This conductive metal coating can be applied by standard deposition techniques, such as brushing, screen printing...

In another preferred embodiment, the oxygen electrode is made of a high-electron-conductivity material, preferably a lanthanum-manganese-based mixed oxide such as lanthanum-strontium-manganese oxide (LSM) or lanthanum-strontium-cobalt-manganese oxide (LSCM) and more preferably a composite of LSM and YSZ (LSM/YSZ), which is compatible with YSZ electrolytes.

In another preferred embodiment, an electron conductive coating of an oxidation-resistant metal is present on the oxygen electrode, preferably said oxidation-resistant metal is gold or silver. This conductive coating can be applied by standard deposition techniques, such as brushing, screen printing...

In another preferred embodiment, the interconnect material preferably has a high oxidation resistance at the temperatures of operation of the stack, a sufficiently small electrical resistance and a coefficient of thermal expansion (CTE) matching that of the cell material to avoid thermal stress build up. In a further preferred embodiment, the interconnect is made of stainless steel or an alloy having a thermal expansion in the range of 10 to 14 10⁻⁶ °C⁻¹ and electrical conductivity in the range of 1 to 10·10³ C cm⁻¹. Preferably, the interconnect is made of stainless steel.

In another preferred embodiment, in order to avoid its oxidation while maintaining electrical conductivity the flat metallic interconnect has an electron-conductive and oxidation-resistant coating on the surface to be in contact with the oxygen. Preferably, said coating is made of manganese cobalt oxide (MCO). The interconnect coating can be applied by simple deposition techniques such as screen-printing. After applying and drying the coating, it is sintered, preferably in a reducing atmosphere.

In another preferred embodiment, a metal mesh or foam is present between the flat metallic interconnect and the ceramic cell both on the fuel and the oxygen side, in order to enhance the current collection/delivery without impairing the gas distribution. Preferably, said metal mesh or foam is made of nickel, gold, silver or platinum. More preferably, a nickel mesh is used for the fuel side and a silver or gold mesh is used for the oxygen side of the cell.

As mentioned elsewhere in the present application, the fabrication of the complex cell shape, subject of this invention is now possible due to the availability of relatively inexpensive commercial 3D-printing technologies. Moreover, such technologies have the advantage that the design can be easily changed to satisfy different technical requirements and different applications.

A particularly appropriate 3D-printing technology for producing the cell configuration, subject of this application is stereolithography (SLA). In this case, the cell is printed by using a photopolymerizable paste containing a high concentration of electrolyte particles together with other, mostly organic components. After cleaning and drying the cell, it is submitted to a thermal treatment in which the organic components are burned out and the ceramic particles are sintered, rendering a high-density compact body.

Using standard technologies, the cell is then functionalized by catalytically active electron-conductive ceramic layers acting as electrodes.

To ensure gas tightness, a seal has to be employed between the endplates, interconnects and cells before stack assembly. Therefore, the design of the cells has to include certain margin around the frame channels and gas inlet and outlet holes, to allow the application of the seal. In a preferred embodiment, the seal is either a compressive one (typically based on mica or alumina) or more preferably a glass. The latter should have a good adherence to both the cell and interconnect material and a coefficient of thermal expansion compatible with both of them. An appropriate technology for applying such a seal is robocasting. In order to apply the material using this method, a paste has to be prepared by mixing the glass powder with an appropriate vehicle.

The invention will be now illustrated by way of several examples, which do not intend to limit its scope.

### EXAMPLE

### Example 1 (prior art)

Figure 1 represents the typical geometry of a state-of-the-art SRU with proportions corresponding to a real commercial cell. As can be seen, the interconnect is much thicker than the cell (1.25 vs 0.2 mm), since the channel sets for the cathode and anode gases (0.45 mm deep) are on top of each other and are supported by a flat, relatively thick plate. The cross section of each channel in this example has a relatively small area of 0.54 mm².

### Example 2

In Figure 2, the SRU geometry from Figure 1 is compared to one embodiment of the invention consisting of an SRU with a cylindrically corrugated cell and a flat interconnect, in which the channel cross section and membrane thickness are preserved (with values of 0.54 mm² and 0.2 mm respectively). As shown, in this case the interconnect can be as thin as the conventional cell, while the cell can be thinner than the conventional interconnect, as the cathode and anode channel sets are no more on top of each other but intercalated. The total SRU thickness of this configuration is 1.2 mm, while that of the conventional one is 1.45 mm, which means a 1.2-fold enhancement of the VPD. Moreover, in this particular example of the invention, there is an area and current density enhancement equal to the ratio of a semicircle's perimeter and diameter, i.e. π/2 = 1.57. Thus, the combined VPD-enhancement is almost a factor of 2 (1.2 x 1.57).

### Example 3

Figure 3 shows the integration of the SRU geometry according to the present invention in a real stack, wherein the basic layout of the cell consists of a corrugated membrane and a frame forming a single body. This body should be made of a ceramic material possessing ionic conductivity such as stabilized zirconia, preferably zirconia doped with 8 mol % yttria (YSZ). The cell membrane is functionalized on both sides with electron-conductive ceramic layers. Typical materials known in the art are Ni-YSZ cermets for the fuel electrode and LSM or LSCM for the oxygen electrode, but there are more options. These coatings can be applied by e.g. 3D printing, spraying or brushing.

### Example 4

SOFC power densities required for e.g. automotive applications (range extenders and APU-s) are of the order of 1.0 kW/I and 0.25 kW/kg, values easily surpassed by employing the proposed technology. A particular embodiment of the present invention based on a membrane with cylindrical corrugation provides an increase of surface area by a factor of π/2=1.57 (ratio between the diameter and half circumference of a circle) with respect to a flat configuration. The channel size of such a corrugation does not affect the area enhancement, so that channel cross section can be easily adjusted to ensure low enough pressure drop.

A cell with 200-300 µm electrolyte with a corrugation of 0.9 mm internal diameter is 1.5-1.6 mm thick, while the interconnect can be as thin as 0.2 mm, implying a reduction of SRU thickness by a factor of ca 2 with respect to most state-of-the art commercial stacks, while preserving distribution channel cross-section. Thus, the overall volumetric power density enhancement is about a factor of 3.

The gain in gravimetric power density is even larger, since the density of typical ceramic electrolyte and electrode materials is smaller than that of common interconnect alloys and both the interconnect thickness and the solid volume fraction of the cell are significantly reduced. Thus, a gravimetric power density of over 1.1 kW/kg is estimated for said embodiment considering a typical superficial power density (0.6 W/cm²) and stabilized zirconia electrolyte and ferritic steel interconnect densities (ca. 6.0 and 7.7 g/cm² respectively).

Another benefit of the corrugated geometry mentioned earlier is its enhanced mechanical strength, having a positive effect also on thermal shock resistance, which is critical for achieving fast start-up times and good thermal cycling behavior. The strength enhancement achieved by corrugating a flat membrane can be easily estimated from stress-strain distributions obtained by the finite elements method. This has been done for the above-mentioned corrugated membrane vs a flat one, both having a square shape and surrounded by a rigid frame. The simulation was set up to emulate the bending of the membranes by applying a force in a small spot in their center. As a result, an 8-fold enhancement of stiffness (force applied divided by the displacement in the direction of the force) and 2-fold enhancement of maximum tolerated stress (using so-called Mohr-Coulomb factor of safety) were estimated.

## Claims

1. A solid oxide cell (SOC) stack made of single repeating units (SRU), each of which comprising:
- a ceramic cell with a corrugated membrane and a sealing frame with gas distribution holes and channels, and
- a flat metallic interconnect;
wherein said ceramic cell and flat metallic interconnect are stacked on top of each other; and
wherein the corrugated membrane is functionalized on both sides with electron-conductive ceramic layers which are a fuel electrode and an oxygen electrode.

2. The solid oxide cell (SOC) stack of claim 1, wherein the membrane thickness is from 0.10 to 0.40 mm.

3. The solid oxide cell (SOC) stack of claim 1 or 2, wherein the internal diameter of the corrugation is from 0.7 to 1.2 mm.

4. The solid oxide cell (SOC) stack of any of claims 1 to 3, wherein the ceramic cell is made of an ion conductive material.

5. The solid oxide cell (SOC) stack of any of claims 1 to 4, wherein the fuel electrode is made of cermet.

6. The solid oxide cell (SOC) stack of any of claims 1 to 5, wherein the oxygen electrode is made of an electron conductive material.

7. The solid oxide cell (SOC) stack of any of claims 1 to 6, wherein a electron conductive metal coating is present on the fuel electrode.

8. The solid oxide cell (SOC) stack of any of claims 1 to 7, wherein an electron conductive coating of an oxidation-resistant metal is present on the oxygen electrode.

9. The solid oxide cell (SOC) stack of any of the preceding claims, wherein the flat metallic interconnect is made of stainless steel.

10. The solid oxide cell (SOC) stack of any of the preceding claims, wherein the flat metallic interconnect has an electron-conductive and oxidation-resistant coating on the surface to be in contact with the oxygen.

11. The solid oxide cell (SOC) stack of claim 10, wherein said coating is made of manganese cobalt oxide (MCO).

12. The solid oxide cell (SOC) stack of any of the preceding claims, wherein the SOC is a solid oxide fuel cell (SOFC) or a solid oxide electrolyzer cell (SOEC).

13. The solid oxide cell (SOC) stack of any of the preceding claims, wherein metal meshes or foam are present between the ceramic cell and the flat metallic interconnect.

14. The solid oxide cell (SOC) stack of claim 13, wherein the metal meshes or foam are made of nickel, gold, silver or platinum.
